# EUROPEAN PATENT SPECIFICATION

(11) **EP 3 009 913 B1**
(45) Date of publication and mention of the grant of the patent: **21.03.2018**
(21) Application number: 15185007.0
(22) Date of filing: 14.09.2015
(51) Int. Cl.: G06F 1/16, H04M 1/02, H04M 1/22

(54) **ELECTRONIC EQUIPMENT**
ELEKTRONISCHES EINRICHTUNG
ÉQUIPEMENT ÉLECTRONIQUE

(30) Priority: 17.10.2014 CN 201410553782
(43) Date of publication of application: 20.04.2016
(73) Proprietor: Xiaomi Inc., Beijing 100085 (CN)
(72) Inventor: LEI, Jun, 100085 Beijing (CN)
(74) Representative: Sackin, Robert

(56) References cited:
- EP-A1- 2 341 698
- CN-B- 102 176 728
- US-A1- 2013 100 379
- Anonymous: "Cool Concept: Samsung Aqua (3 pics) - My Modern Met", , 8 September 2010 (2010-09-08), XP055237662, Retrieved from the Internet: URL:http://www.mymodernmet.com/profiles/bl ogs/cool-concept-samsung-aqua-3 [retrieved on 2015-12-18]
- Anonymous: "A Battery You Can See Through | MIT Technology Review", , 25 July 2011 (2011-07-25), XP055237660, Retrieved from the Internet: URL:http://www.technologyreview.com/news/4 24802/a-battery-you-can-see-through/ [retrieved on 2015-12-18]

## Description

### TECHNICAL FIELD

The present disclosure generally relates to the field of electronic equipment manufacturing, and more particularly, to an electronic equipment.

### BACKGROUND

With the development of electronic equipment, the appearance of the electronic equipment has diversified. For example, shells with specific colors may be made for electronic equipment, or, protective casings with specific colors may be installed for electronic equipment.

In order to provide electronic equipment with transparency so as to meet users' demand for appearance of electronic equipment, a user may additionally equip the rear shell of electronic equipment with a transparent protective casing which may vary with environment color.

"Cool Concept: Samsung Aqua (3 pics) - My Modem Met", 8 September 2010 (2010-09-08), XP055237662, URL:http://www.mymodernmet.com/profiles/blogs/cool-concept-samsung-aqua-3 discloses a phone that appears to be made of water, but it's actually just an illusion. The phone runs on a liquid-type battery.

US patent application with publication No. US 2013/0100379 discloses a semitransparent electronic device that includes a glossy sheath having an internal cavity and a display unit disposed in the internal cavity.

"A battery You Can See Through | MIT Technology Review", 25 July 2011 (2011-07-25), XP055237660, URL:http://www.technologyreview.com/news/424802/a-battery-you-can-see-through/ discloses fully transparent batteries.

European patent application with publication No. EP2341698 discloses a mobile terminal with a transparent case.

Chinese patent application with publication No. CN/02176728 discloses an electronic device for changing colour according to a background light source. An electrochromic layer of the shell can change the colour.

### SUMMARY

The present disclosure provides an electronic equipment. The technical solution is as below.

An aspect of the invention is defined by independent claim 1 to which reference should now be made. Optional features are defined by the dependent claims.

The technical scheme according to embodiments of the disclosure may have the following beneficial effects.

The transparent material shell is sealed to form a holding cavity in which the transparent liquid cell, the display screen component, the mainboard component, the accessory component and the power supply component are disposed; wherein the mainboard component is connected to the display screen component, the mainboard component is connected to the accessory component, and the mainboard component is connected to the power supply component; electronic equipment is made from transparent material so that the electronic equipment is featured by transparency, without additionally equipping the rear shell of electronic equipment with a transparent protective casing, thus solving the problem that additional configuration of a transparent protective casing leads to poorer heat dissipation performance of electronic equipment, and achieving the effect of improving the whole transparency of electronic equipment.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a block diagram of an electronic equipment according to a preferred embodiment.
Fig. 2A is a block diagram of an electronic equipment according to another embodiment.
Fig. 2B is a connection diagram of an electronic equipment according to an embodiment.
Fig. 3A is a flow chart of a method for using an electronic equipment according to an exemplary embodiment.
Fig. 3B is a schematic diagram of an electronic equipment displaying a bubble icon according to an exemplary embodiment.
Fig. 3C is a schematic diagram of an electronic equipment displaying an interface corresponding to a bubble icon according to an exemplary embodiment.
Fig. 4 is a flow chart of a method for using an electronic equipment according to an exemplary embodiment.
Fig. 5 is a flow chart of a method for using an electronic equipment according to an exemplary embodiment.
Fig. 6 is a flow chart of a method for using an electronic equipment according to an exemplary embodiment.
Fig. 7 is a flow chart of a method for using an electronic equipment according to an exemplary embodiment.
Fig. 8A is a flow chart of a method for using an electronic equipment according to an exemplary embodiment.
Fig. 8B is a schematic diagram showing a charging interface of an electronic equipment according to an exemplary embodiment.

### DETAILED DESCRIPTION

Reference will now be made in detail to preferred and exemplary embodiments, examples of which are illustrated in the accompanying drawings. The following description refers to the accompanying drawings in which the same numbers in different drawings represent the same or similar elements unless otherwise represented. The implementations set forth in the following description of preferred and exemplary embodiments do not represent all implementations consistent with the disclosure. Instead, they are merely examples of apparatuses and methods consistent with aspects related to the disclosure as recited in the appended claims.

In the process of realizing the present disclosure, related technologies are found to have at least the following disadvantage: a transparent protective casing additionally arranged on the rear shell of electronic equipment may affect heat dissipation of electronic equipment, thus leading to poorer heat dissipation performance of electronic equipment.

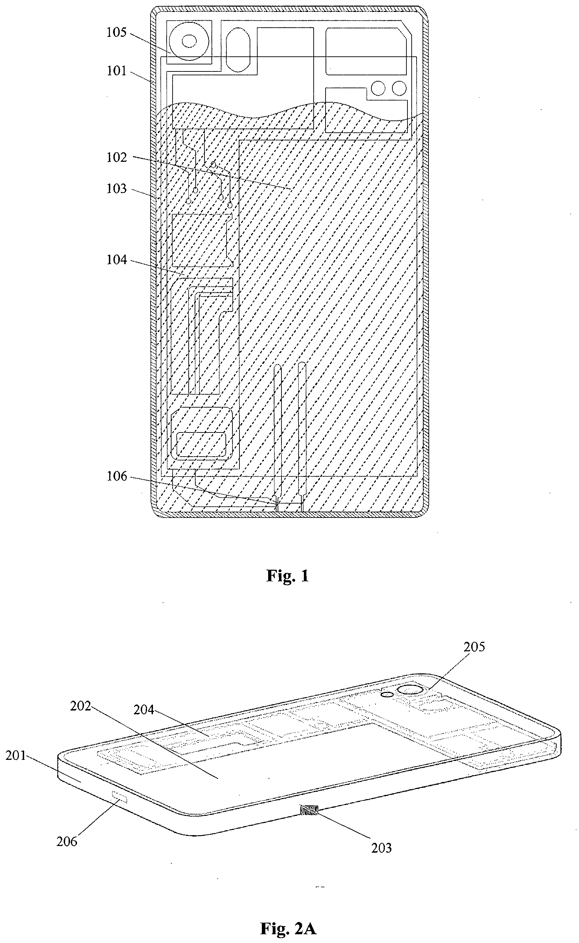

Fig. 1 is a block diagram of an electronic equipment according to a preferred embodiment, as shown in Fig. 1, the electronic equipment includes but is not limited to: a transparent material shell 101 and a transparent liquid cell 102, the transparent material shell 101 is sealed to form a holding cavity in which the transparent liquid cell 102, a display screen component 103, a mainboard component 104, an accessory component 105 and a power supply component 106 are disposed;
the mainboard component 104 is connected to the display screen component 103, and the display screen is made from transparent material;
the mainboard component 104 is connected to the accessory component 105; and
the mainboard component 104 is connected to the power supply component 106.

In conclusion, as to the electronic equipment provided in embodiments of the present disclosure, the transparent material shell is sealed to form a holding cavity in which the transparent liquid cell, the display screen component, the mainboard component, the accessory component and the power supply component are disposed; wherein the mainboard component is connected to the display screen component, the mainboard component is connected to the accessory component, and the mainboard component is connected to the power supply component. Accordingly, the electronic equipment is made from transparent material so that electronic equipment is featured by transparency, without additionally equipping the rear shell of electronic equipment with a transparent protective casing, thus solving the problem that additional configuration of a transparent protective casing leads to poorer heat dissipation performance of electronic equipment, and achieving the effect of improving the whole transparency of electronic equipment.

Fig. 2A is a block diagram of an electronic equipment according to another embodiment, as shown in Fig. 2A, the electronic equipment includes but is not limited to: a transparent material shell 201 and a transparent liquid cell 202, the transparent material shell 201 is sealed to form a holding cavity in which the transparent liquid cell 202, a display screen component 203, a mainboard component 204, an accessory component 205 and a power supply component 206 are disposed;
the mainboard component 204 is connected to the display screen component 203, and the display screen is made from transparent material;
the mainboard component 204 is connected to the accessory component 205; and
the mainboard component 204 is connected to the power supply component 206.

Wherein, the display screen component 203 may be controlled for display by the mainboard component 204 via its connection with the display screen component 203, and the display screen may be made from transparent material so as to ensure transparency of electronic equipment. The accessory component 205 may be controlled by the mainboard component 204 via its connection with the accessory component 205 including a web camera, a flash lamp and a range sensor, etc. The power supply component 206 may be controlled by the mainboard component 204 via its connection with the power supply component 206 to manage the transparent liquid cell 202, and the power supply component 206 may include a charging chip and charging electrodes, etc.

In the present embodiment, the transparent material shell 201 may be made from transparent material into a one-piece shell so as to ensure that the shell is sealed and the operating environment of components in the holding cavity is clean; or, the transparent material shell 201 may be made from transparent material into a transparent material front shell 2011 and a transparent material rear shell 2012, and both the transparent material front shell 2011 and the transparent material rear shell 2012 are assembled to form the transparent material shell 201.

For example, the transparent material shell 201 includes a transparent material front shell 2011 and a transparent material rear shell 2012, both the transparent material front shell 2011 and the transparent material rear shell 2012 are sealed to form the holding cavity; and the transparent material front shell 2011 is connected to the display screen component 203.

Wherein, when being connected to each other, the transparent material rear shell 2012 may be connected to the transparent material front shell 2011 by a plastic fastener; or, in order to improve the leakproofness of the transparent material shell 201, the transparent material rear shell 2012 may be embedded into the transparent material front shell 2011. In this case, the transparent material rear shell 2012 is slightly smaller than the transparent material front shell 2011 in area. Thus, the transparent material rear shell 2012 can be perfectly integrated with the transparent material front shell 2011 when they are connected to each other.

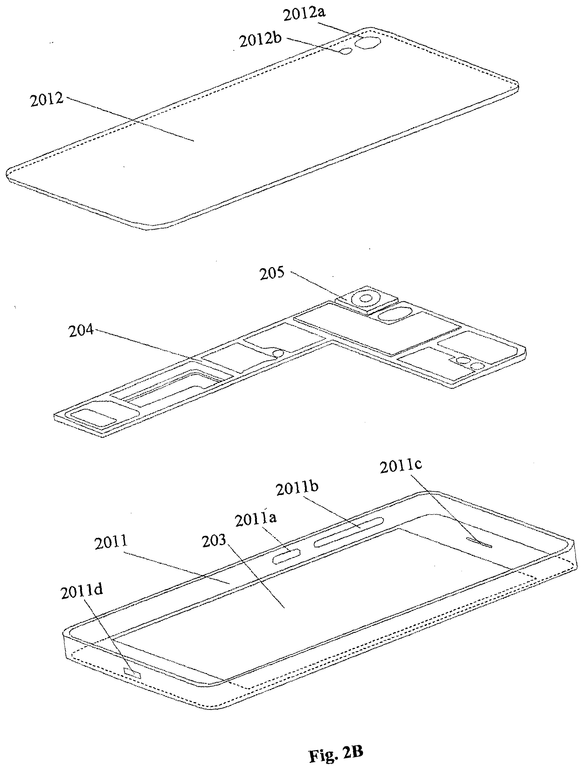

Please refer to a connection diagram of electronic equipment as shown in Fig. 2B. Fig. 2B is illustrated by taking an example in which both the transparent material rear shell 2012 and the transparent material front shell 2011 are shaped like a rounded rectangle, and the transparent material rear shell 2012 is slightly smaller than the transparent material front shell 2011 in area. After being connected to each other, the transparent material rear shell 2012 is embedded into the transparent material front shell 2011 so as to seal up the joint between the transparent material rear shell 2012 and the transparent material front shell 2011.

It should be explained that both the transparent material rear shell 2012 and the transparent material front shell 2011 may also be in the shape of a rectangle, etc. The present embodiment does not limit shapes of the transparent material rear shell 2012 and the transparent material front shell 2011.

In the present embodiment, the transparent liquid cell 202 may include transparent electrolyte, a positive electrode and a negative electrode; the transparent electrolyte may be filled in a first residual space formed by excepting the display screen component 203, the mainboard component 204, the accessory component 205, the power supply component 206, the positive electrode and the negative electrode from the holding cavity; or the transparent electrolyte may be filled in a second residual space formed by excepting the positive electrode and the negative electrode from a transparent container which is disposed in the holding cavity.

For example, when the transparent liquid cell 202 is transparent electrolyte, both the positive electrode and the negative electrode are disposed in the holding cavity, and the transparent electrolyte is filled in the first residual space excepting the display screen component 203, the mainboard component 204, the accessory component 205, the power supply component 206, the positive electrode and the negative electrode from the holding cavity. The transparent electrolyte may freely flow within the holding cavity which is sealed up and formed by the transparent material rear shell 2012 and the transparent material front shell 2011, thus improving the space utilization of the holding cavity. Or, the transparent electrolyte, the positive electrode and the negative electrode are disposed in a transparent container which is disposed in the holding cavity and is respectively connected to the display screen component 203, the mainboard component 204, the accessory component 205 and the power supply component 206, and the transparent container may be equal to the transparent material rear shell 2012 in length and width so that the transparent container may be embedded between the transparent material front shell 2011 and the transparent material rear shell 2012. In this way, the transparent electrolyte, the positive electrode and the negative electrode are disposed in a transparent container so that it is convenient to execute an operation (inspection, replacement and the like) on the transparent liquid cell.

Wherein, the power supply component 206 is configured to control the process for charging the transparent electrolyte by the positive electrode and the negative electrode, or, to control the discharge process of the transparent electrolyte. When the transparent electrolyte is at a discharge process, the transparent electrolyte is filled in the first residual space of the holding cavity. Therefore, the transparent electrolyte may contact the display screen component 203, the mainboard component 204 and the accessory component 205, respectively providing power for the display screen component 203, the mainboard component 204 and the accessory component 205.

In order to prevent the transparent electrolyte from generating trace gas during work thus leading to potential safety hazard, the transparent electrolyte has a filling ratio of less than 1 in the first residual space. In other words, when the transparent electrolyte is poured into a holding cavity sealed up and formed by the transparent material rear shell 2012 and the transparent material front shell 2011, the holding cavity is provided with a reserved space for storing gas generated by the transparent electrolyte during work. Correspondingly, when the transparent electrolyte, the positive electrode and the negative electrode are disposed in a transparent container, the transparent electrolyte also has a filling ratio of less than 1 in the second residual space excepting the positive electrode and the negative electrode from the transparent container.

The transparent electrolyte may be lithium battery electrolyte or other kinds of electrolyte, and may not generate gas in the charge or discharge process, or may generate trace gas, so as to prevent from generating a lot of gas in confined space thus leading to potential safety hazard. The present embodiment does not limit the category of electrolyte.

For example, the display screen component 203, the mainboard component 204 and the accessory component 205 are externally sealed with transparent material; and if the transparent electrolyte is filled in the first residual space, the transparent material is acid-resisting and alkaline-resisting material, or the transparent material is plated with acid-resisting and alkaline-resisting material.

When the display screen component 203, the mainboard component 204 and the accessory component 205 are made from transparent material, the display screen component 203, the mainboard component 204 and the accessory component 205 may be directly disposed in the holding cavity. When the display screen component 203, the mainboard component 204 and the accessory component 205 are not made from transparent material, the display screen component 203, the mainboard component 204 and the accessory component 205 may be externally sealed with transparent material so as to increase transparency of electronic equipment.

In actual use, when the transparent liquid cell 202 is disposed in a transparent container, the display screen component 203, the mainboard component 204 and the accessory component 205 externally sealed with transparent material may be directly disposed in the holding cavity. Electrolyte is generally acid or alkali liquid, thus, the transparent container may be made from acid-resisting and alkaline-resisting material, or the transparent container may be plated with acid-resisting and alkaline-resisting material on the surface in contact with electrolyte, so as to prevent the transparent electrolyte from corroding the transparent container.

When the transparent liquid cell 202 is directly disposed in the holding cavity, transparent electrolyte needs pouring into a confined space formed by connection between the transparent material rear shell 2012 and the transparent material front shell 2011 and the transparent electrolyte is generally acid or alkali liquid. Therefore, when the transparent material rear shell 2012 is made from poor acid-resisting and alkaline-resisting material, the transparent material rear shell 2012 may be plated with acid-resisting and alkaline-resisting material on the surface in contact with transparent electrolyte, so as to prevent the transparent electrolyte from corroding the transparent material rear shell 2012. Wherein, the poor acid-resisting and alkaline-resisting material may be transparent organic glass, etc.

Similarly, the mainboard component 204 is disposed in electronic equipment and is in direct contact with transparent electrolyte. Therefore, the mainboard component 204 may be made from acid-resisting and alkaline-resisting material, or, the mainboard component 204 may be sealed up by acid-resisting and alkaline-resisting material, or, the mainboard component 204 may be sealed up by transparent material which is then plated with acid-resisting and alkaline-resisting material, so as to prevent the transparent electrolyte in electronic equipment from corroding the transparent material on the mainboard component 204. Namely, the transparent material for sealing up the mainboard component 204 is acid-resisting and alkaline-resisting material, or, the transparent material for sealing up the mainboard component 204 is plated with acid-resisting and alkaline-resisting material. Similarly, the transparent material for sealing up the display screen component 203 is acid-resisting and alkaline-resisting material, or, the transparent material for sealing up the display screen component 203 is plated with acid-resisting and alkaline-resisting material. The transparent material for sealing up the accessory component 205 is acid-resisting and alkaline-resisting material, or, the transparent material for sealing up the accessory component 205 is plated with acid-resisting and alkaline-resisting material. For example, the mainboard component 204 and the accessory component 205 may be sealed together by transparent material.

For example, when the transparent material front shell 2011 is connected to the display screen component 203, the display screen component 203 is completely posted to the transparent material front shell 2011, thus fixing the display screen component 203. In addition, when the transparent electrolyte is filled in the first residual space, the contact area between the display screen component 203 and the transparent electrolyte may be reduced, and the possibility of corrosion of the display screen component 203 by the transparent electrolyte may also be reduced. When the display screen component 203 is completely posted to the transparent material front shell 2011, only one side of the display screen component 203 in contact with the transparent electrolyte is subject to a treatment of acid and alkali resistance.

When the transparent electrolyte is filled in the first residual space and the contact area between the transparent material front shell 2011 and the display screen component 203, the mainboard component 204 and the accessory component 205 is relative small and the transparent material front shell 2011 is still in contact with the transparent electrolyte, in this case, the transparent material front shell 2011 may be made from acid-resisting and alkaline-resisting material, e.g., glass material; or, the transparent material front shell 2011 may be made from poor acid-resisting and alkaline-resisting material, such as transparent organic glass, in this case, a layer of acid-resisting and alkaline-resisting material is plated on the contact surface between the transparent material front shell 2011 and the transparent electrolyte, so as to prevent the transparent electrolyte from corroding the transparent material front shell 2011. Namely, if the transparent electrolyte is in contact with the transparent material front shell 2011 and the transparent material front shell 2011 is made from glass material, acid-resisting and alkaline-resisting material is plated on the contact surface between glass material and the transparent electrolyte.

When the transparent material rear shell 2012 is connected to the transparent material front shell 2011, the connection joint between the transparent material rear shell 2012 and the transparent material front shell 2011 is sealed up by acid-resisting and alkaline-resisting material so as to prevent the transparent electrolyte from leaking out.

For example, the transparent material front shell 2011 may be made from glass material or transparent organic glass material with predetermined strength grade, to which the present embodiment makes no restriction. The predetermined strength grade is generally high. For example, if strength grades of glass material are classified into ten grades, wherein the 8th grade, the 9th grade and the 10th grade are high strength grades. The predetermined strength grade may be any one of the 8th grade, the 9th grade and the 10th grade. It should be explained that material for manufacturing the transparent material rear shell 2012 is not limited in the present embodiment.

For example, positions for installation of a part of built-in accessories in electronic equipment may be preformed on the transparent material rear shell 2012. For example, generally the rear shell of electronic equipment is preformed with positions for installation of a web camera and a flash lamp. Therefore, the transparent material rear shell 2012 is preformed with a hole 2012a and a hole 2012b. Wherein, the hole 2012a is used for installation of the web camera of a camera component in the accessory component 205, and the hole 2012b is used for installation of the flash lamp of the camera component in the accessory component 205. Of course, the transparent material rear shell 2012 may also be preformed with positions for installation of other built-in accessories. The quantity and shape of holes in the transparent material rear shell 2012 are not limited in the present embodiment.

When the transparent material rear shell 2012 is preformed with installation positions, the installation positions may be sealed up by acid-resisting and alkaline-resisting material so as to prevent the transparent electrolyte from leaking out.

For example, the transparent material rear shell 2012 is transparent. Therefore, the transparent material rear shell 2012 may be not preformed with a hole 2012a and a hole 2012b, the camera component is available for normal shooting by means of the transparent material rear shell 2012, and the flash lamp in the camera component is available for normal lighting by means of the transparent material rear shell 2012.

For example, the transparent material front shell 2011 is also provided with positions for installation of a part of function keys such as a power key 2011a, a volume key 2011b, an earpiece 2011c and a USB (Universal Serial Bus) interface 2011d as shown in Fig. 2B.

For example, a circuit board in the mainboard component 204 is a circuit board with a predetermined shape.

The circuit board with a predetermined shape refers to a circuit board of different shapes designed by manufacturers for different populations so as to better meet users' demands. Of course, users may also customize a circuit board with a desired shape such as Doraemon™, Hello Kitty™, or Garfield™, etc.

The accessory component 205 includes: at least one lamp, each lamp can give out light with at least one color, and each lamp is respectively connected to the mainboard component 204 and the transparent liquid cell 202.

Wherein, each lamp can give out light with at least one color. For example, a lamp gives out blue light, a lamp gives out green light, a lamp gives out yellow light, a lamp gives out red light and so on.

In the present embodiment, each lamp is respectively connected to the mainboard component 204 and the transparent liquid cell 202. The mainboard component 204 is used for controlling on-off of a lamp, and the transparent liquid cell 202 is used for providing power for a lamp.

For example, the electronic equipment also includes a color sensor which is respectively connected to the mainboard component 204 and the transparent liquid cell 202.

In the present embodiment, the color sensor is respectively connected to the mainboard component 204 and the transparent liquid cell 202. The mainboard component 204 is used for controlling on-off of the color sensor, and the transparent liquid cell 202 is used for providing power for the color sensor.

It should be explained that the whole transparent electronic equipment is subject to a waterproof design, capable of preventing transparent electrolyte from leaking out and also preventing external liquid from flowing into the transparent electronic equipment.

In conclusion, as to the electronic equipment provided in embodiments of the present disclosure, a transparent electronic equipment is formed by connecting the transparent material front shell provided with a display screen component, built-in accessories sealed up by transparent material, the transparent liquid cell and the transparent material rear shell. Accordingly, the electronic equipment is made from transparent material so that the electronic equipment is featured by transparency, without additionally equipping the rear shell of the electronic equipment with a transparent protective casing, thus solving the problem that additional configuration of a transparent protective casing leads to poorer heat dissipation performance of electronic equipment, and achieving the effect of improving transparency of the whole electronic equipment.

In the electronic equipment provided in embodiments of the present disclosure, the electronic equipment is supplied with power by transparent electrolyte which can make full use of space, thus solving the problem of lower space utilization of electronic equipment which is provided with power by a solid-state battery, and reaching the effect of improving the space utilization of electronic equipment.

In the electronic equipment provided in embodiments of the present disclosure, the transparent material front shell is made from glass material or organic glass material with predetermined strength grade, thus solving the problem that the display screen and front shell of the electronic equipment are easily broken or damaged under ambient pressure, and reaching the effect of protecting built-in devices in the electronic equipment and extending the service life of the electronic equipment.

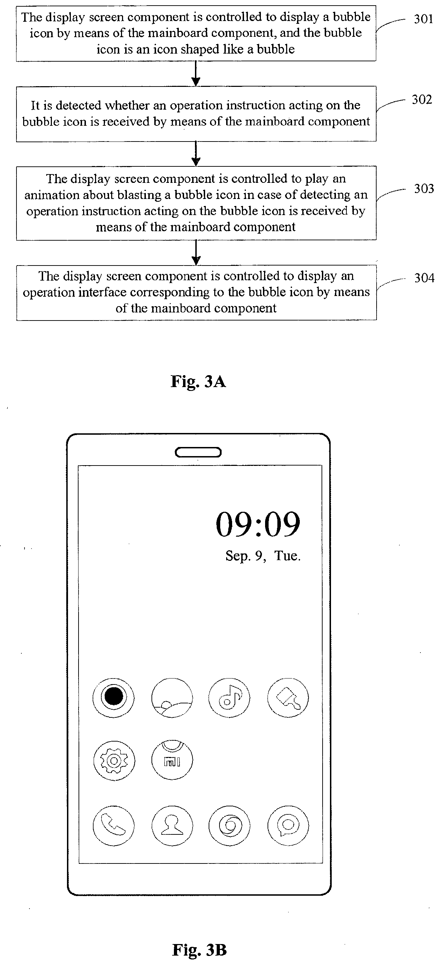

Fig. 3A is a flow chart of a method for using an electronic equipment according to an exemplary embodiment, the method can be applied to the electronic equipment as shown in Fig. 2A. As shown in Fig. 3A, the method for using an electronic equipment includes following steps.

In Step 301, the display screen component is controlled to display a bubble icon by means of the mainboard component, the bubble icon is an icon shaped like a bubble.

The electronic equipment can control the display screen component to display an icon shaped like a bubble on a display screen by means of the mainboard component. Please refer to Fig. 3B, which is a schematic diagram about an electronic equipment displaying a bubble icon according to an exemplary embodiment. As shown in Fig. 3B, the electronic equipment can control the display screen component to display icons shaped like a bubble (such as camera, photo album, music and theme, etc.) on a display screen by means of the mainboard component.

In Step 302, it is detected whether an operation instruction acting on the bubble icon is received by means of the mainboard component.

In the present embodiment, the display screen is touch-enabled. If a user needs to operate on a bubble icon, an operation instruction is received by the electronic equipment when the user clicks the bubble icon on the display screen.

In Step 303, the display screen component is controlled to play an animation about blasting a bubble icon in case of detecting an operation instruction acting on the bubble icon is received by means of the mainboard component.

Wherein, the animation about blasting a bubble icon is prestored in the electronic equipment. After receiving the operation instruction, the electronic equipment may control a player to play the animation by means of the mainboard component, and control the display screen component to display the played animation.

In Step 304, the display screen component is controlled to display an operation interface corresponding to the bubble icon by means of the mainboard component.

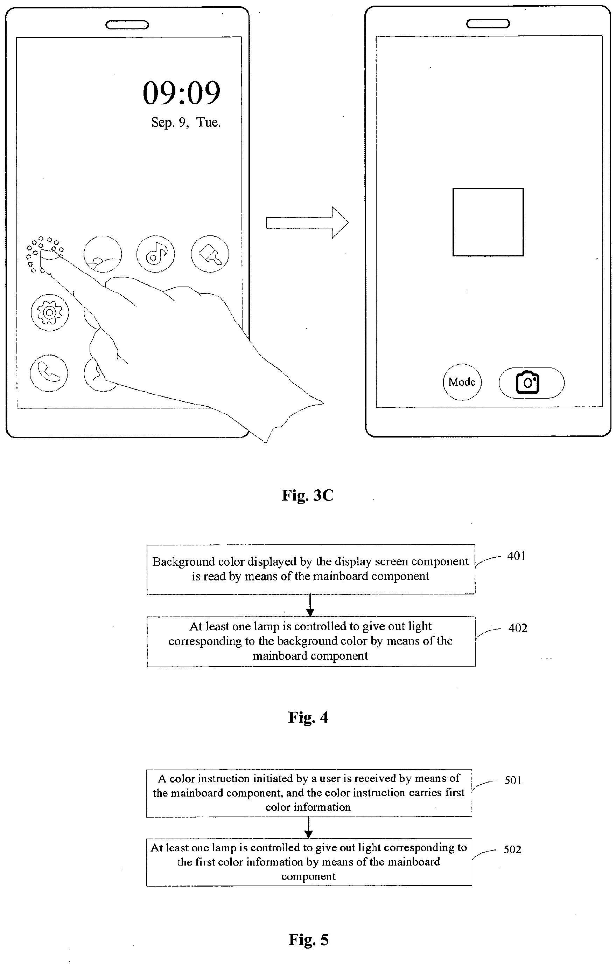

Please refer to Fig. 3C, which is a schematic diagram about an electronic equipment displaying an interface corresponding to a bubble icon according to an exemplary embodiment. As shown in Fig. 3C, when a user clicks a camera icon shaped like a bubble, the electronic equipment controls the display screen component to display the animation about blasting the camera icon shaped like a bubble on the display screen by means of the mainboard component and enters into the camera interface.

In conclusion, as to the method for using an electronic equipment provided in embodiments of the present disclosure, the display screen component is controlled to display a bubble icon by means of the mainboard component, and display the animation about blasting the bubble icon after an operation instruction acting on the bubble icon is received. An icon is set to be shaped like a bubble according to characteristics of the transparent electrolyte, thus solving the problem that ordinary icons are boring and dull, and reaching the effect of improving the display effect of the whole electronic equipment.

Fig. 4 is a flow chart of a method for using an electronic equipment according to an exemplary embodiment. The method may be applied to the electronic equipment as shown in Fig. 2A, which is provided with at least one lamp. As shown in Fig. 4, the method for using an electronic equipment includes following steps.

In Step 401, the background color displayed by the display screen component is read by means of the mainboard component.

Wherein, the mainboard component can read frames displayed in the display screen component and identify the background colors of the frames. When there are more colors in the frames, each color is picked until at least two colors are acquired; or, the display scale of each color is acquired and the color which has the largest display scale serves as the background color of the frames.

In Step 402, at least one lamp is controlled to give out light corresponding to the background color by means of the mainboard component.

When the mainboard component picks one background color, one lamp is controlled to give out light corresponding to the background color. When the mainboard component picks at least two background colors, at least two lamps are controlled to give out light corresponding to either background color, respectively. It is possible to simultaneously control at least two lamps to give out light, or to control the at least two lamps to give out light in turn in a predetermined sequence. For example, in a descending order according to display scale of background colors, or, in random order, etc.

For example, when electronic equipment reads that the background color displayed in the display screen component is green by means of the mainboard component, the electronic equipment controls lamps in the accessory component by means of the mainboard component to enable at least one lamp to give out light a same color as the read background color (i.e., green light) so that the whole electronic equipment is displayed as green.

In conclusion, as to the method for using an electronic equipment provided in embodiments of the present disclosure, background color displayed by the display screen component is read by means of the mainboard component, and at least one lamp is controlled to give out light corresponding to the background color. Accordingly, the electronic equipment can change its own color according to the background color displayed in the display screen, thus solving the problem that electronic equipment is monotonous in color and is unable to change colors, and reaching the effect of enriching colors of electronic equipment.

Fig. 5 is a flow chart of a method for using an electronic equipment according to an exemplary embodiment. The method may be applied to the electronic equipment as shown in Fig. 2A, which is provided with at least one lamp. As shown in Fig. 5, the method for using an electronic equipment includes following steps.

In Step 501, a color instruction initiated by a user is received by means of the mainboard component, the color instruction carries first color information.

Wherein, the color instruction carries first color information for indicating the color of the electronic equipment. For example, a user wants to set the color of the electronic equipment as green, in this case, the first color information carried in the color instruction initiated by the user is green.

In the present embodiment, a color instruction may be initiated in a setup interface, for example, the electronic equipment displays each color and a user selects from displayed colors to generate a color instruction; or the electronic equipment generates a color instruction after detection of designated operation, for example, generating a color instruction after receiving double click operation, etc.

In Step 502, at least one lamp is controlled to give out light corresponding to the first color information by means of the mainboard component.

After receiving a color instruction by means of the mainboard component, the electronic equipment reads the first color information and controls at least one lamp to give out light corresponding to the first color information by means of the mainboard component.

For example, a user wants to set the color of electronic equipment as green. In this case, a user may select green from instructions displayed in the setup interface to generate a color instruction carrying first color information (green). After receiving the color instruction by means of the mainboard component, electronic equipment controls lamps in the accessory component by means of the mainboard component to enable at least one lamp to give out light with a same color as the first color information (i.e., green light) so that the whole electronic equipment is set as green.

In conclusion, as to the method for using an electronic equipment provided in embodiments of the present disclosure, a color instruction initiated by a user is received by means of the mainboard component, and at least one lamp is controlled to give out light corresponding to the first color information in the color instruction. Accordingly, a user may change the color of the electronic equipment according to needs, thus solving the problem that electronic equipment is monotonous in color and it is difficult to change colors, and reaching the effect of enriching colors of the electronic equipment and improving user experience.

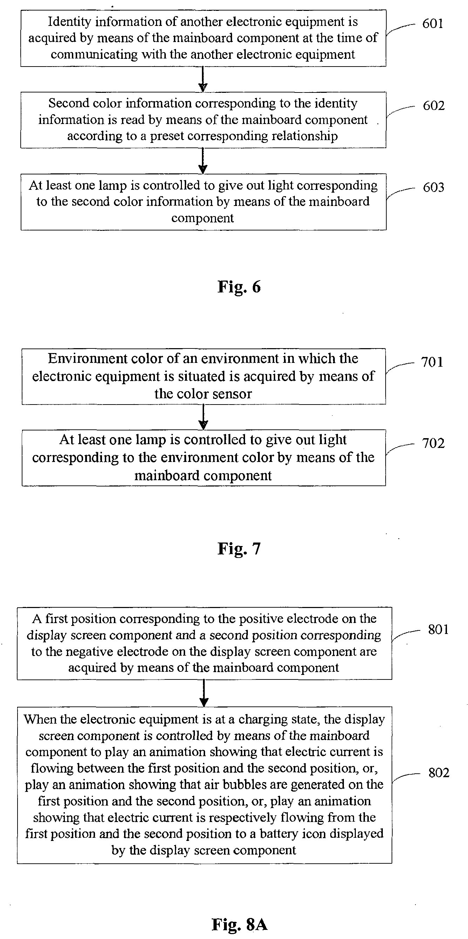

Fig. 6 is a flow chart of a method for using an electronic equipment according to an exemplary embodiment. The method may be applied to the electronic equipment as shown in Fig. 2A, which is provided with at least one lamp. As shown in Fig. 6, the method for using an electronic equipment includes following steps.

In Step 601, identity information of another electronic equipment is acquired by means of the mainboard component at the time of communicating with the another electronic equipment.

Wherein, a communication with the another electronic equipment may be either initiated by the electronic equipment or initiated by the another electronic equipment, the present embodiment does not limit on a communication initiator. Moreover, the communication may be a communication either before or after a call is connected, to which the present embodiment makes no restriction.

The identity information may be used to identify an identity of the another electronic equipment. For example, the identity information may include at least one of a telephone number, a name and a group.

In Step 602, a second color information corresponding to the identity information is read by means of the mainboard component according to a preset corresponding relationship.

The preset relationship is a one-to-one correspondence between different identity information and different second color information, which may be prestored in electronic equipment. For example, if a relative group is corresponding to red in the corresponding relationship, the second color information read from the corresponding relationship is red when the identity information read by means of the mainboard component indicates that the another electronic equipment belong to the relative group.

In Step 603, at least one lamp is controlled to give out light corresponding to the second color information by means of the mainboard component.

After receiving the second color information by means of the mainboard component, the electronic equipment controls at least one lamp to give out light corresponding to the second color information.

For example, a user groups all contacts and sets corresponding colors in a preset relationship. For example, a user classifies contacts into a classmate group, a workmate group, a relative group, a stranger group and other groups, and associates the classmate group to green, the workmate group to yellow, the relative group to red, and the stranger group to gray, and so on. In case of receiving an incoming call, the electronic equipment acquires the identity information of the caller by means of the mainboard component and finds that the caller is a relative of the user. At that moment, the electronic equipment reads that the color corresponding to the relative group is red by means of the mainboard component, and then the electronic equipment controls lamps in the accessory component to give out red light by means of the mainboard component so as to prompt the user that the caller is a relative.

In conclusion, as to the method for using an electronic equipment provided in embodiments of the present disclosure, identity information of other electronic equipments are acquired by means of the mainboard component during communicating with other electronic equipments, then the second color information corresponding to the identity information is read according the preset corresponding relationship by means of the mainboard component, and at least one lamp is controlled to give out light corresponding to the second color information by means of the mainboard component. Accordingly, the user can be prompted about the identity information of a caller by changing the color of the electronic equipment, thus solving the problem that it is unable to intuitively display the identity information about a caller in case of receiving an incoming call, and reaching the effect of facilitating a user in identifying callers.

Fig. 7 is a flow chart of a method for using an electronic equipment according to an exemplary embodiment. The method may be applied to the electronic equipment as shown in Fig. 2A, which is provided with a color sensor and at least one lamp. As shown in Fig. 7, the method for using an electronic equipment includes following steps.

In Step 701, environment color of an environment in which the electronic equipment is situated is acquired by means of the color sensor.

Wherein, the color sensor is used for detecting the environment color of an environment in which the electronic equipment is situated. For example, when the electronic equipment is in a white environment, the color sensor detects that the color of the environment is white.

In Step 702, at least one lamp is controlled to give out light corresponding to the environment color by means of the mainboard component.

The color sensor may send the environment color to the mainboard component, and the mainboard component controls at least one lamp to give out light corresponding to the environment color according to the environment color.

For example, when the electronic equipment is placed on a white desk, the electronic equipment detects that the environment color is white by means of the color sensor, and then the electronic equipment controls lamps in the accessory component by means of the mainboard component to enable at least one lamp to give out white light.

In conclusion, as to the method for using an electronic equipment provided in embodiments of the present disclosure, the environment color of the environment in which the electronic equipment is situated is acquired by means of a color sensor, and at least one lamp is controlled to give out light corresponding to the environment color. Accordingly, the color of the electronic equipment can be changed according to the environment color, thus solving the problem that electronic equipment is monotonous in color, and reaching the effect of enriching colors of electronic equipment and improving the transparency of the electronic equipment.

Fig. 8A is a flow chart of a method for using an electronic equipment according to an exemplary embodiment. The method can be applied to the electronic equipment as shown in Fig. 2A, which is provided with a positive electrode and a negative electrode. As shown in Fig. 8A, the method for using an electronic equipment includes following steps.

In Step 801, a first position corresponding to the positive electrode on the display screen component and a second position corresponding to the negative electrode on the display screen component are acquired by means of the mainboard component.

As the display screen component is made from transparent material, the first position corresponding to the positive electrode on the display screen component is the position for installation of the positive electrode, and the second position corresponding to the negative electrode on the display screen component is the position for installation of the negative electrode. Wherein, the installation position may be saved in the electronic equipment in advance and read by means of the mainboard component.

In Step 802, at a charging state, the electronic equipment controls, by means of the mainboard component, the display screen component to play an animation showing that electric current is flowing between the first position and the second position, or, controls by means of the mainboard component the display screen component to play an animation showing that air bubbles are generated on the first position and the second position, or, controls by means of the mainboard component the display screen component to play an animation showing that electric current is respectively flowing from the first position and the second position to a battery icon displayed by the display screen component.

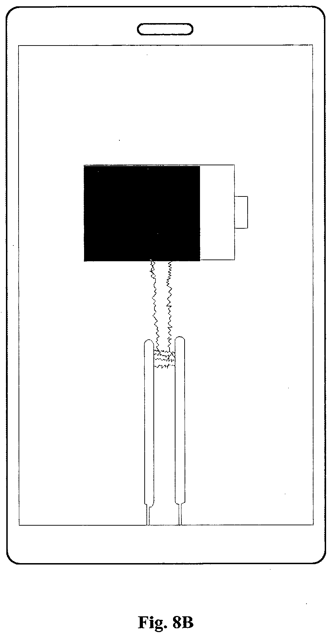

Please refer to Fig. 8B, which is a schematic diagram showing the charging interface of an electronic equipment according to an exemplary embodiment. As shown in Fig. 8B, at a charging state, the electronic equipment controls, by means of the mainboard component, the display screen component to play an animation showing that electric current is flowing between positions corresponding to two electrode bars so as to indicate the process of charging the transparent electrolyte by the positive electrode and the negative electrode. Wherein, electric current flowing between the first position and the second position may also be implemented as bubble whose size is in positive correlation relationship to current magnitude. Namely, the greater the current value is, the larger the bubble is.

When the mainboard component controls the display screen component to display the icon of a battery on a display screen, it may also control the display screen to play an animation showing that electric current is respectively flowing from the first position and the second position to the battery icon.

In conclusion, as to the method for using an electronic equipment provided in exemplary embodiments of the present disclosure, a first position corresponding to the positive electrode on the display screen component and a second position corresponding to the negative electrode on the display screen component are acquired by means of the mainboard component, and the display screen component is controlled to play an animation showing that electric current is flowing between the first position and the second position by means of the mainboard component during charging. Accordingly, the animation showing the electric current can be displayed at screen positions corresponding to electrode bars during charging due to transparency of the electronic equipment, thus solving the problem that ordinary electronic equipment are boring and dull during charging, and reaching the effect of improving user experience and increasing enjoyment.

## Claims

1. An electronic equipment, comprising: a transparent material shell (101, 201) and a transparent liquid cell (102, 202), the transparent material shell (101, 201) being sealed to form a holding cavity, and the transparent liquid cell (102, 202), a display screen component (103, 203), a mainboard component (104, 204), an accessory component (105, 205) and a power supply component (106, 206) are disposed in the holding cavity; wherein,
the mainboard component (104, 204) is connected to the display screen component (103, 203), and the display screen is made from transparent material;
the mainboard component (104, 204) is connected to the accessory component (105, 205);
the mainboard component (104, 204) is connected to the power supply component (106, 206) wherein the transparent liquid cell (102, 202) comprises a transparent electrolyte, a positive electrode and a negative electrode; and
the transparent electrolyte is filled in a first residual space formed by excepting the display screen component (103, 203), the mainboard component (104, 204), the accessory component (105, 205), the power supply component (106, 206), the positive electrode and the negative electrode from the holding cavity.

2. The electronic equipment of claim 1, wherein once the electrolyte is filled in the first residual space, the holding cavity is provided with a reserved space for storing gas generated by the transparent electrolyte during work.

3. The electronic equipment of claim 1, wherein the display screen component (103, 203), the mainboard component (104, 204), and the accessory component (105, 205) are externally sealed with transparent material; and
the transparent material is acid-resisting and alkaline-resisting material, or the transparent material is plated with acid-resisting and alkaline-resisting material.

4. The electronic equipment of claim 1, wherein a circuit board in the mainboard component (104, 204) is formed in a predetermined shape.

5. The electronic equipment of any of claims 1-4, wherein the accessory component (105, 205) comprises: at least one lamp, each lamp being able to give out light with at least one color; and
each lamp is respectively connected with the mainboard component (104, 204) and the transparent liquid cell (102, 202).

6. The electronic equipment of claim 5, wherein the accessory component (105, 205) further comprises: a color sensor; and
the color sensor is respectively connected with the mainboard component (104, 204) and the transparent liquid cell (102, 202).

7. The electronic equipment of any of claims 1-4, wherein the transparent material shell (201) comprises a transparent material front shell (2011) and a transparent material rear shell (2012), both of which are sealed to form the holding cavity; and
the transparent material front shell (2011) is connected to the display screen component (203).

## Patentansprüche

1. Elektronisches Gerät, das Folgendes aufweist: eine Schale (101, 201) aus transparentem Material und eine transparente Flüssigkeitszelle (102, 202), wobei die Schale (101, 201) aus transparentem Material zum Bilden eines Aufnahmehohlraums dicht verschlossen ist und im Aufnahmehohlraum die transparente Flüssigkeitszelle (102, 202), eine Bildschirmkomponente (103, 203), eine Hauptplatinenkomponente (104, 204), eine Zubehörkomponente (105, 205) und eine Stromversorgungskomponente (106, 206) angeordnet sind; wobei
die Hauptplatinenkomponente (104, 204) mit der Bildschirmkomponente (103, 203) verbunden ist und der Bildschirm aus transparentem Material hergestellt ist;
die Hauptplatinenkomponente (104, 204) mit der Zubehörkomponente (105, 205) verbunden ist;
die Hauptplatinenkomponente (104, 204) mit der Stromversorgungskomponente (106, 206) verbunden ist, wobei die transparente Flüssigkeitszelle (102, 202) einen transparenten Elektrolyten, eine positive Elektrode und eine negative Elektrode aufweist
und der transparente Elektrolyt in einen ersten verbleibenden Zwischenraum gefüllt ist, der durch Ausschließen der Bildschirmkomponente (103, 203), der Hauptplatinenkomponente (104, 204), der Zubehörkomponente (105, 205), der Stromversorgungskomponente (106, 206), der positiven Elektrode und der negativen Elektrode vom Aufnahmehohlraum gebildet wurde.

2. Elektronisches Gerät nach Anspruch 1, wobei, wenn der Elektrolyt in den ersten verbleibenden Zwischenraum gefüllt worden ist, der Aufnahmehohlraum mit einem reservierten Zwischenraum zum Aufbewahren von Gas versehen ist, das während des Betriebs durch den transparenten Elektrolyten erzeugt wird.

3. Elektronisches Gerät nach Anspruch 1, wobei die Bildschirmkomponente (103, 203), die Hauptplatinenkomponente (104, 204) und die Zubehörkomponente (105, 205) mit transparentem Material äußerlich dicht verschlossen sind; und
das transparente Material säurebeständiges und alkalibeständiges Material ist oder das transparente Material mit säurebeständigem und alkalibeständigem Material beschichtet ist.

4. Elektronisches Gerät nach Anspruch 1, wobei eine Leiterplatte im Hauptplatinenteil (104, 204) in einer vorbestimmten Form ausgebildet ist.

5. Elektronisches Gerät nach einem der Ansprüche 1 bis 4, wobei die Zubehörkomponente (105, 205) Folgendes aufweist: wenigstens eine Lampe, wobei jede Lampe Licht mit wenigstens einer Farbe ausgeben kann und
wobei jede Lampe jeweils mit der Hauptplatinenkomponente (104, 204) und der transparenten Flüssigkeitszelle (102, 202) verbunden ist.

6. Elektronisches Gerät nach Anspruch 5, wobei die Zubehörkomponente (105, 205) ferner Folgendes aufweist: einen Farbsensor; und
wobei der Farbsensor jeweils mit der Hauptplatinenkomponente (104, 204) und der transparenten Flüssigkeitszelle (102, 202) verbunden ist.

7. Elektronisches Gerät nach einem der Ansprüche 1 bis 4, wobei die Schale (201) aus transparentem Material eine vordere Schale (2011) aus transparentem Material und eine hintere Schale (2012) aus transparentem Material umfasst, die beide zum Bilden des Aufnahmehohlraums dicht verschlossen sind; und
die vordere Schale (2011) aus transparentem Material mit der Bildschirmkomponente (203) verbunden ist.

## Revendications

1. Equipement électronique, comprenant : une coque en matériau transparent (101, 201) et une cellule de liquide transparent (102, 202), la coque en matériau transparent (101, 201) étant scellée pour former une cavité de réception, et la cellule de liquide transparent (102, 202), un composant d'écran d'affichage (103, 203), un composant de carte principale (104, 204), un composant d'accessoire (105, 205) et un composant d'alimentation électrique (106, 206) sont disposés dans la cavité de réception ; dans lequel,
le composant de carte principale (104, 204) est connecté au composant d'écran d'affichage (103, 203), et l'écran d'affichage est réalisé dans un matériau transparent ;
le composant de carte principale (104, 204) est connecté au composant d'accessoire (105, 205) ;
le composant de carte principale (104, 204) est connecté au composant d'alimentation électrique (106, 206) dans lequel la cellule de liquide transparent (102, 202) comprend un électrolyte transparent, une électrode positive et une électrode négative ;
et l'électrolyte transparent est rempli dans un premier espace résiduel formé en excluant le composant d'écran d'affichage (103, 203), le composant de carte principale (104, 204), le composant d'accessoire (105, 205), le composant d'alimentation électrique (106, 206), l'électrode positive et l'électrode négative de la cavité de réception.

2. Equipement électronique selon la revendication 1, dans lequel une fois que l'électrolyte est rempli dans le premier espace résiduel, la cavité de réception est dotée d'un espace réservé pour stocker un gaz généré par l'électrolyte transparent durant le fonctionnement.

3. Equipement électronique selon la revendication 1, dans lequel le composant d'écran d'affichage (103, 203), le composant de carte principale (104, 204) et le composant d'accessoire (105, 205) sont scellés extérieurement avec un matériau transparent ; et
le matériau transparent est un matériau résistant aux acides et résistant aux bases, ou le matériau transparent est plaqué avec un matériau résistant aux acides et résistant aux bases.

4. Equipement électronique selon la revendication 1, dans lequel une carte de circuit dans le composant de carte principale (104, 204) est conçue dans une forme prédéterminée.

5. Equipement électronique selon l'une quelconque des revendications 1 à 4, dans lequel le composant d'accessoire (105, 205) comprend : au moins une lampe, chaque lampe étant en mesure d'émettre une lumière ayant au moins une couleur ; et
chaque lampe est respectivement connectée au composant de carte principale (104, 204) et à la cellule de liquide transparent (102, 202).

6. Equipement électronique selon la revendication 5, dans lequel, le composant d'accessoire (105, 205) comprend en outre : un capteur chromatique ; et
le capteur chromatique est connecté respectivement au composant de carte principale (104, 204) et à la cellule de liquide transparent (102, 202).

7. Equipement électronique selon l'une quelconque des revendications 1 à 4, dans lequel la coque en matériau transparent (201) comprend une coque en matériau transparent avant (2011) et une coque en matériau transparent arrière (2012), qui sont tous deux scellées pour former la cavité de réception ; et
la coque en matériau transparent avant (2011) est connectée au composant d'écran d'affichage (203).
